# EUROPEAN PATENT SPECIFICATION

(11) **EP 1 659 744 B1**
(45) Date of publication and mention of the grant of the patent: **25.12.2013**
(21) Application number: 04105936.1
(22) Date of filing: 19.11.2004
(51) Int. Cl.: H04W 76/06

(54) **Method and System for Self-Terminating a Media Service Due to an Out-of-Coverage Condition**
Verfahren und System zur automatischen Unterbrechung eines Mediadienstes aufgrund von Unerreichbarkeit
Procédé et système de cessation automatique d'un service média pour cause de perte de couverture

(43) Date of publication of application: 24.05.2006
(73) Proprietor: BlackBerry Limited, Waterloo, ON N2K 0A7 (CA)
(72) Inventor: Abdel-Kader, Sherif, N2K 4H7, Waterloo, (CA)
(74) Representative: Patel, Binesh

(56) References cited:
- US-A- 6 055 426
- "Requirements on the session Initiation Protocol (SIP)" 3RD-GENERATION PARTNERSHIP PROJECT (3GPP) RELEASE 5, 11 October 2002 (2002-10-11), pages 1-35, XP015003414
- "ungraceful session termination in the IM domain" 3GPP TSG, 8 September 2000 (2000-09-08), XP002323665
- DONAVAN S., ROSENBERG J.: "Session timers in the session Initiation Protocol (SIP)" IETF.INTERNET DRAFTS, 18 July 2004 (2004-07-18), pages 1-28, XP002327823

## Description

The present application relates to methods and devices for gracefully terminating media services in response to out-of-coverage conditions at one of the termination points for the media service and, in particular, to terminating a wireless VoIP call when a mobile device goes out-of-coverage.

Many mobile wireless devices now provide users with the capability to obtain media communication services over packet-based wireless networks. For example, many mobile devices are enabled to provide Voice-over-IP (VoIP). Wireless local area networks (WLANs), such as those defined by the IEEE 802.11 standard, are also becoming more common, especially on business or university campuses or other facilities in order to provide effective wireless coverage to a defined area.

A media service like VoIP operates over a packet-based network using a peer-to-peer connectionless protocol, such as real-time transport protocol (RTP), to exchange data packets between two or more termination points, for example, mobile devices. An RTP path is typically established through the wireless network (and, possibly, other connected networks) using a service set-up or control protocol, like session initiation protocol (SIP). Other control or set-up protocols may also be used to establish an RTP path, or other connectionless peer-to-peer transport path, to facilitate packet exchange for a media service.

A media service in which at least one of the termination points is a mobile device operating in a wireless network is prone to disruption as a result of the mobile device losing coverage. Coverage may be lost for a number of reasons, but most commonly because the mobile device roams into a region in which RF communications between the mobile device and a wireless network base station are interrupted, attenuated, interfered with, or otherwise disrupted. When the mobile device goes out-of-coverage, neither it nor the other termination point (which may also be a mobile device) is necessarily aware of the out-of-coverage condition at an application level. As a result, the service that was established between the two termination points continues, despite the fact that the devices cannot exchange data packets. Therefore the devices remain tied up by a stalled service application when they might otherwise establish other services. The devices may remain busy with the failed service until a user deems the service to have failed and manually initiates termination of the service.

It would be advantageous to provide for methods and devices that gracefully terminate services in response to out-of-coverage conditions without necessarily requiring manual user intervention.

"Requirements on the session initiation protocol (SIP)" 3RD-Generation Partnership Project (#GPP) Release 5, 11 October 2002, pages 1-35, XP015003414 describes releasing network resources when a mobile device goes out-of-coverage, using a network centric mechanism. US6055426 describes another mechanism for releasing network resources using an alternate low-bandwidth larger coverage channel to allow the mobile device to signal the network that it is gone out-of-coverage, allowing the network to recover the correspondingly allocated network resources.

"Ungraceful session termination in IM domain" #GPP TSG, 8 September 2000, XP002323665 and Donovan S. Rosenberg J.: "Session timers in the session Initiation Protocol (SIP)" IETF.INTERNET DRAFTS, 18 July 2004, pages 1-34, XP002327823 describe using SIP refresh or keep-alive messages which set and reset timers for determining whether to terminate a session between a mobile device and a termination point.

The present application describes methods, systems, and devices that detect out-of-coverage conditions with respect to a mobile device engaged in a media service over a connectionless packet-based media path. The methods, systems, and devices provide for graceful termination of the media service in response to the detected out-of-coverage condition.

The present application describes a method and mobile device that selfterminates a media service if an out-of-coverage condition is detected. The media service operates on top of a connectionless peer-to-peer packet-based transport protocol. The outof-coverage condition may relate to the mobile device itself or to a remote mobile device engaged in the media service. The loss of coverage by the remote mobile device may be detected by observing whether the remote mobile device has failed to send any data packets for more than a predetermined period of time. If an out-of-coverage situation is detected, then the method or device initiates service cancellation or release, by closing the media service application associated with the media service and releasing resources on the mobile device.

In yet another aspect, the present application provides a method of self-terminating a media service due to an out-of-coverage condition, the media service being established between a mobile device and a remote termination point over a wireless network, the media service comprising the transmission of data packets using a peer-to-peer connectionless transport protocol, the mobile device going out-of-coverage, characterised in that the method comprises the steps of: recognizing a loss of signal coverage on the mobile device and starting a timer in response to said loss of signal coverage; stopping said timer if said signal coverage is restored; and terminating the media service on the mobile device if said timer exceeds a predetermined threshold, wherein said step of terminating comprises closing a media service application on the mobile device associated with the media service and releasing resources on the mobile device.

In a further aspect, the present application provides a mobile device for engaging in a media service with a remote termination point over a wireless network, the media service comprising the transmission of data packets using a peer-to-peer connectionless transport protocol, the mobile device comprising a communications subsystem for establishing a connection with the wireless network and receiving RF communications, comprising data packets from the remote termination point; and a processor for controlling said communications subsystem, and characterised in that the mobile device comprises: a call termination module for self-terminating the media service due to an out-of-coverage condition, said call termination module comprising, a timer for determining an elapsed time since a loss of signal coverage, said timer being triggered by said loss of signal coverage and said timer being stopped by a restoration of signal coverage; and a loss of coverage handler responsive to said elapsed time reaching a predetermined threshold, wherein said loss of coverage handler terminates the media service on the mobile device; said loss of coverage handler comprising a component for releasing resources on the mobile device and closing a media service application on the mobile device associated with the media service.

In another aspect, the present application provides a method of self-terminating a media service by a first mobile device due to an out-of-coverage condition at a second mobile device, the media service being conducted between the first mobile device and the second mobile device over a wireless network, the media service comprising the transmission of data packets using a peer-to-peer connectionless transport protocol the data packets comprising media data packets containing media data associated with the media service, characterised in that the method comprises the steps of: starting a timer on the first mobile device after receipt of a said data packet from the second mobile device; restarting said timer if a further said data packet is received from the second mobile device; and terminating the media service if said timer exceeds a predetermined threshold.

In a further aspect, the present application provides a first mobile device for engaging in a media service with a second mobile device over a wireless network, the media service operating over a peer-to-peer connectionless transport protocol, the first mobile device comprising a communications subsystem for establishing a connection with the wireless network and receiving RF communications, comprising data packets from the second mobile device using the peer-to-peer connectionless transport protocol; and a processor for controlling said communications subsystem, and characterised in that the mobile device comprises: a call termination module for self-terminating the media service due to an out-of-coverage condition at the second mobile device, said call termination module comprising, a timer for determining an elapsed time since receipt of a most recent said data packet from the second mobile device, said timer being started by receipt of said most recent data packet and said timer being restarted by receipt of a subsequent said data packet; and a loss of coverage handler responsive to said elapsed time reaching a predetermined threshold, wherein said loss of coverage handler terminates the media service, wherein said most recent data packet and said subsequent data packet each comprise a media data packet containing media data associated with the media service.

Other aspects and features of the present application will be apparent to one of ordinary skill in the art in light of the following detailed description and drawings depicting one or more embodiments.

### BRIEF DESCRIPTION OF THE DRAWINGS

Embodiments will now be described, by way of example only, with reference to the attached Figures, wherein:

Figure 1 diagrammatically shows a wireless communications system;

Figure 2 diagrammatically shows another embodiment of the wireless communication system;

Figure 3 shows a block diagram of an embodiment of a mobile device;

Figure 4 shows, in flowchart form, a method for handling out-of-coverage conditions using a proxy server;

Figure 5 shows, in flowchart form, a method of detecting that a remote mobile device has lost coverage; and

Figure 6 shows a flowchart depicting a method of terminating a service in response to an out-of-coverage condition in a wireless device.

Like reference numerals are used throughout the Figures to denote similar elements and features.

### DETAILED DESCRIPTION

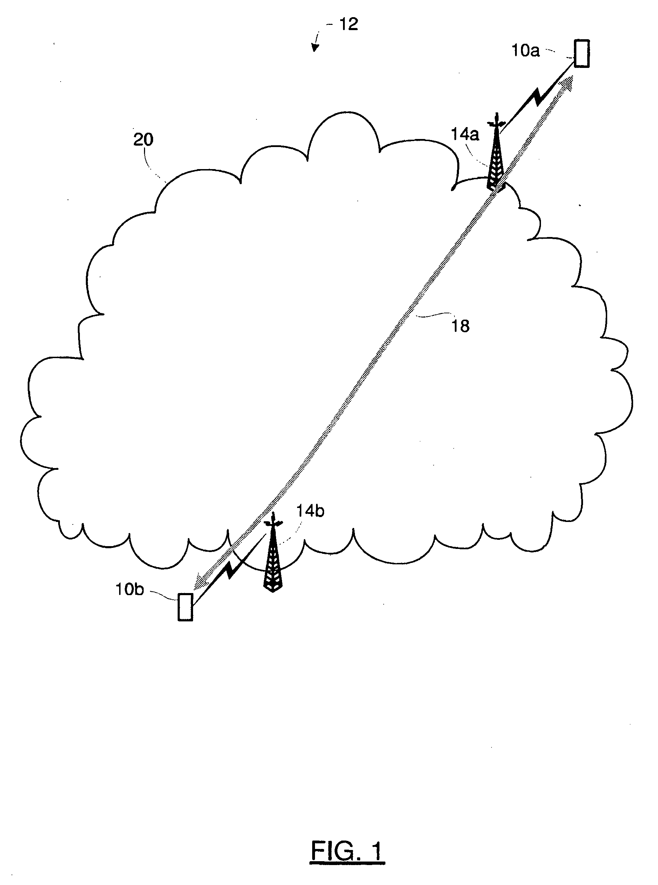

Reference is first made to Figure 1, which diagrammatically shows a wireless communications system 12. The wireless communications system 12 includes a plurality of access points or base stations 14 (two are shown individually as 14a and 14b) interconnected in a network 20. The wireless communications system 12 may comprise a wireless local area network associated with a campus, building, or other facility. For example, the wireless communication system 12 may comprise a wireless network conforming to IEEE 802.11 standards. In other embodiments, the wireless communications system 12 may comprise any wireless communications network or combination of interconnected networks, including, without limitation, TDMA, CDMA, GSM/GPRS, EDGE, UMTS or CDPD. The wireless communications system 12 may be connected to other networks or communication systems including, for example, the public switched telephone network (PSTN) (not shown), or a wide area network such as the Internet (not shown).

As is known, the base stations 14 perform radio frequency (RF) protocols to support data and voice exchanges with one or more mobile devices 10 (shown individually as 10a and 10b). Each mobile device 10 is configured to exchange RF-based communications with one of the base stations 14 using known protocols. The mobile device 10a may establish a service with another mobile device 10b or other termination point, wherein the service includes sending and/or receiving media packets through the wireless communications system 12 over a media path 18. The media packets relate to real-time media, such as audio, video, or multi-media applications. In one embodiment, the media packets relate to a Voice-over-IP call. In other embodiments the media packets may relate to video sessions, streaming audio or video, real-time gaming applications or other multi-media sessions. Such a media session may be established over IP-based networks using real-time transport protocol (RTP) on top of user datagram protocol (UDP). Session initiation protocol (SIP) or other control protocols may be employed to set-up, manage, control, and or tear down media paths between termination points.

Although Figure 1 depicts a media session between two mobile devices 10 in the wireless communication system 12, it will be appreciated that the present application is not limited to point-to-point media services and may include multi-cast or broadcast communications. Moreover, the present application is not limited to communications within the wireless communications system 12. The media service may be established between a mobile device 10 within the wireless communication system and termination points located on other networks connected with the wireless communication system 12, including through the Internet or the PSTN. The termination points are not necessarily other mobile devices 10, and may include IP phones, personal computers, gateways, media servers, and any other device capable of terminating a media service.

The media service operating over the media path 18 is prone to disruption if one of the mobile devices 10 goes out-of-coverage. Coverage may be lost for a number of reasons, but most commonly because the mobile device 10 roams into a region in which RF communications between the mobile device 10 and a wireless network base station 14 are interrupted, attenuated, interfered with, or otherwise disrupted. When the mobile device 10 goes out-of-coverage, at an application level neither it nor the other termination point (which may also be a mobile device 10) may be aware of the out-of-coverage condition. As a result, the service that was established between the two termination points may continue, despite the fact that packets cannot be sent or received from the out-of-coverage mobile device 10.

In accordance with an aspect of the present application, the out-of-coverage mobile device, for example mobile device 10a, self-terminates the media service after a predetermined time if coverage has not been restored. The mobile device 10a detects when coverage is first lost and begins a timer. If coverage is restored, then the timer is reset and the media service resumes normal operation. If coverage is not restored before expiry of a predetermined time period, then the out-of-coverage mobile device 10a presumes that it will not regain coverage soon and it terminates the service. For example, in the case of a VoIP call, it releases the call.

In accordance with another aspect of the present application, the in-coverage mobile device 10b may also self-terminate the media service if it recognizes that the other device 10a has lost coverage and has not regained it within a preset time period. The in-coverage mobile device 10b may recognize that the other device 10a has lost coverage by noting that the other device 10a has ceased sending data packets. The in-coverage mobile device 10b may start a timer after receipt of a data packet from the other device 10a. If no further data packets are received from the other device 10a before expiry of the preset time period, then the in-coverage device 10b may assume that the other device 10a has lost coverage and has been unable to regain it. The in-coverage device 10b may then terminate the service. For example, in the case of a VoIP call, the in-coverage device may release the call. It may also send a call release command, like a SIP BYE message to the other device 10a or its proxy server.

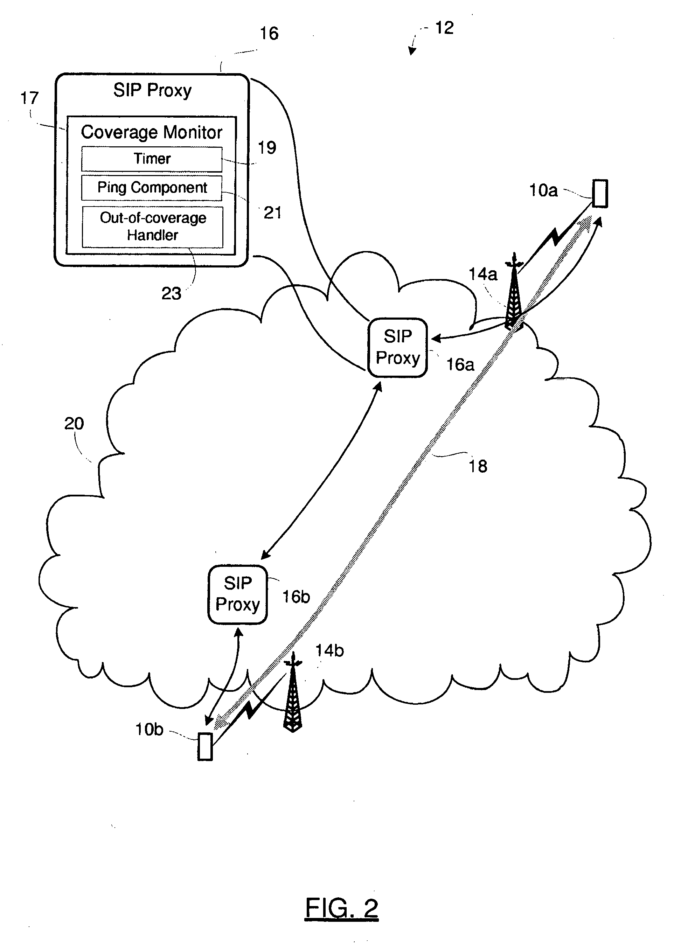

Reference is now made to Figure 2, which diagrammatically shows another embodiment of the wireless communication system 12. Figure 2 shows one or more proxy servers 16 (shown individually as 16a and 16b) within the wireless network 20.

In one embodiment, the proxy servers 16 may comprise call control or set-up servers for communicating with an associated mobile device 10 to setup the media path 18 to enable establishment of the media service between the mobile devices 10. In one example embodiment, the proxy servers 16 comprise SIP proxies for performing SIP signalling to set up an RTP path for the media service.

In accordance with one aspect of the present invention, a proxy server 16 monitors its associated mobile device 10 to detect an out-of-coverage condition. If the proxy server 16 determines that its associated mobile device 10 has gone out-of-coverage and has not regained coverage within a set time period, then it informs the other mobile device 10 and/or its associated proxy server 16 about the out-of-coverage condition. The proxy server 16 having the associated out-of-coverage mobile device 10 may send a service termination message upon determining that the device 10 has been out-of-coverage for the set time period. For example, in the embodiment shown in Figure 2, the SIP proxy 16a may send a SIP BYE message to the other SIP proxy 16b if mobile device 10a goes out-of-coverage for more than the preset time period.

To determine whether its associated mobile device 10 has lost coverage, the SIP proxies may each include a coverage monitor 17. The coverage monitor 17 may include a timer 19, a ping component 21, and an out-of-coverage handler 23. The coverage monitor 17 is configured to detect when the mobile device 10 goes out-of-coverage and determine whether the device 10 is likely to regain coverage in a reasonable period of time. The coverage monitor 17 is also configured to notify the other party or termination point if the mobile device 10 is unlikely to regain coverage.

In particular, the ping component 21 sends a periodic ping or other message to the associated mobile device 10. Upon receipt of the ping, the mobile device 10 responds with a reply message. The ping may be any message to which the mobile device 10 will automatically respond if it is capable of receiving the ping and sending a response, i.e. if it is in coverage. The ping component 21 may ping the mobile device 10 on a periodic basis, such as for example once every second. It will be appreciated that it could be more often or less often depending on the circumstances and any concern with the overhead created by the ping messages.

The timer 19 monitors the time between reply messages. If the mobile device 10 fails to send a reply message for a set period of time, for example ten or more seconds, then the timer 19 expires. Expiry of the timer 19 is indicative of the mobile device 10 being out-of-coverage.

The out-of-coverage handler 23 reacts to expiry of the timer 19 by sending an out-of-coverage message to the other termination point or its proxy server 16. In one embodiment, the out-of-coverage handler 23 sends a service termination message to gracefully terminate the service due to the out-of-coverage condition. In an embodiment wherein the proxy server 16 comprises a SIP proxy, the out-of-coverage handler 23 sends a SIP BYE message to terminate the SIP session.

Those of ordinary skill in the art will appreciate that the mobile device 10 is configured to accept and respond to ping messages from the proxy server 16. Moreover, those of ordinary skill in the art will appreciate that it may be advantageous for the other termination point or its associated proxy server to accept service termination messages or commands from the proxy server 16. In some cases, the other termination point may be configured to reject such messages or commands from an unknown server. Accordingly, it may be advantageous to use a proxy server having an existing relationship with the mobile device 10 and the other termination point and/or its proxy, since they will be configured to accept communications from such a source. For example, the proxy server 16 may comprise the media service control server associated with setting up the media path 18 between the termination points to enable the media service. In one embodiment, the proxy server 16 may comprise a SIP proxy. In another embodiment, the proxy server 16 may comprises an H.323 proxy.

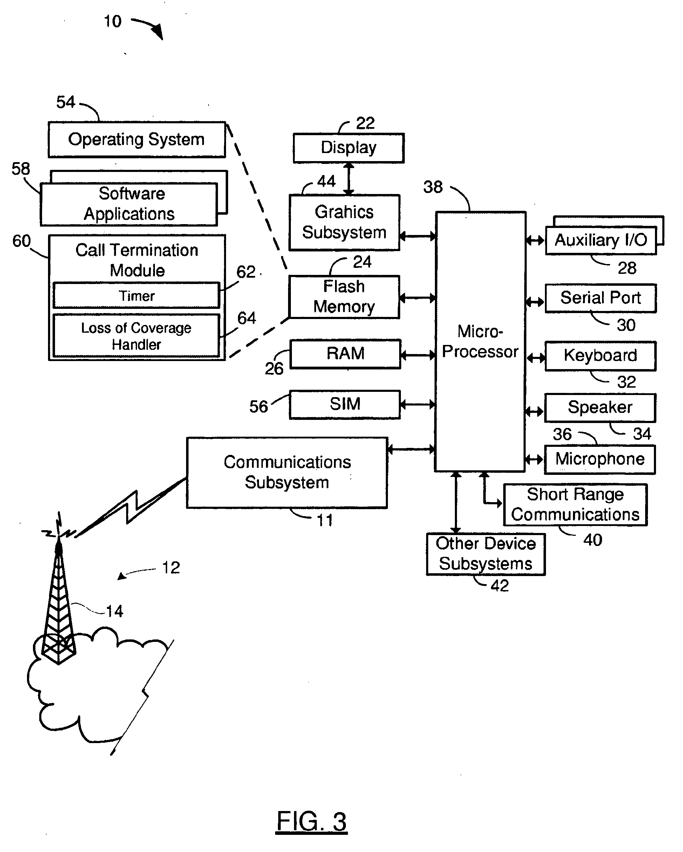

Reference is now made to Figure 3, which shows a block diagram of an embodiment of a mobile device 10. The mobile device 10 is a hand-held two-way mobile communication device having at least data and possibly also voice communication capabilities. In an example embodiment, the device 10 has the capability to communicate with other computer systems on the Internet. In various embodiments, the mobile device 10 may include a data communication device, a multiple-mode communication device configured for both data and voice communication, a mobile IP telephone, a mobile communication device, a PDA enabled for wireless communications, a 1-way or 2-way pager, a wireless modem operating in conjunction with a computer system, and any other type of mobile wireless communication device capable of engaging in real-time packet-based communication services such as, for example, VoIP. In the presently described embodiment, the mobile device 10 is configured to operate within the wireless communications system 12. It should be appreciated however that the present application is in no way limited to these example types of devices and may be implemented in other devices.

The device 10 includes a communication subsystem 11. The communications subsystem 11 manages the wireless RF communications with base stations 14 in the wireless communications system 12. The communication subsystem 11 may include one or more antennae, a transceiver, a processing element like a digital signal processor and other components. As will be apparent to those skilled in the field of communications, the particular design of the communication subsystem 11 will be dependent upon the wireless communications system 12 in which the device 10 is intended to operate. The communication subsystem 11 manages the tasks of establishing a connection with a base station 14 and sending and receiving packets over the connection.

The device 10 includes a microprocessor 38 that controls the overall operation of the device 10. The microprocessor 38 interacts with the communications subsystem 11 and also interacts with further device subsystems such as the display 22, flash memory 24, random access memory (RAM) 26, subscriber identity module (SIM) 56, auxiliary input/output (I/O) subsystems 28 (which may include a thumb-wheel, for example), serial port 30, keyboard or keypad 32, speaker 34, microphone 36, a short-range communications subsystem 40, and any other device subsystems generally designated as 42.

Some of the subsystems shown in Figure 3 perform communication-related functions, whereas other subsystems may provide "resident" or on-device functions. Notably, some subsystems, such as keyboard 32 and display 22 for example, may be used for both communication-related functions, such as entering a text message for transmission over a communication network, and device-resident functions such as a calculator or task list.

Host operating system software 54 and various host software applications 58 used by the microprocessor 38 are, in one example embodiment, stored in a persistent store such as flash memory 24 or similar storage element. Host software applications 58 may include a wide range of applications, including a text messaging application, a ring tone application, a contacts application, and/or a game application. Those skilled in the art will appreciate that the host operating system 54, specific host applications 58, or parts thereof, may be temporarily loaded into a volatile store such as RAM 26. It is contemplated that received communication signals may also be stored to RAM 26.

The microprocessor 38, in addition to its operating system functions, enables execution of host software applications 58 on the device. A predetermined set of host applications 58 which control basic device operations, including at least voice communication applications for example, will normally be installed on the device 10 during manufacture. Further applications may also be loaded onto the device 10 through the WLAN 12, an auxiliary I/O subsystem 28, serial port 30, short-range communications subsystem 40 or any other suitable subsystem 42, and installed by a user in the RAM 26 or a non-volatile store for execution by the microprocessor 38. Such flexibility in application installation increases the functionality of the device and may provide enhanced on-device functions, communication-related functions, or both. For example, secure communication applications may enable electronic commerce functions and other such financial transactions to be performed using the device 10.

In a communication mode, a received signal such as a voice call, a text message, or web page download will be processed by the communication subsystem 11 and input to the microprocessor 38, which will preferably further process the received signal for output to the speaker 34 or the display 22, or alternatively to an auxiliary I/O device 28. A user of device 10 may also compose data items such as text messages for example, using the keyboard 32 in conjunction with the display 22 and possibly an auxiliary I/O device 28. Such composed items may then be transmitted over a communication network through the communication subsystem 11.

The serial port 30 in Figure 3 would normally be implemented in a personal digital assistant (PDA)-type communication device for which synchronization with a user's desktop computer (not shown) may be desirable, but is an optional device component. Such a port 30 would enable a user to set preferences through an external device or software application and would extend the capabilities of the device by providing for information or software downloads, including user interface information, to the device 10 other than through a wireless communication network.

A short-range communications subsystem 40 is a further component which may provide for communication between the device 10 and different systems or devices, which need not necessarily be similar devices. For example, the subsystem 40 may include an infrared device and associated circuits and components or a Bluetooth™ communication module to provide for communication with similarly enabled systems and devices.

The mobile device 10 also includes a call termination module 60. The call termination module 60 provides self-termination capability to react to out-of-coverage conditions. The loss of coverage may relate to the mobile device 10 itself or to a remote termination point engaged in a media service with the mobile device 10.

The call termination module 60 includes a timer 62 and a loss of coverage handler 64.

In one aspect according to the present application, the timer 62 is configured to start when the mobile device 10 loses coverage. The loss of coverage may be detected by the communications subsystem 11, which may issue a message or signal (or event, interrupt, etc.) indicating the loss of coverage. The timer 62 starts in response to detection of the loss of coverage and is reset if coverage is re-established. The reestablishment of coverage may cause the communications subsystem 11 to issue a further message or signal indicating that coverage has been re-obtained. Alternatively, the loss of coverage may be deduced by polling the communications subsystem 11 to determine the signal level. If the device is in coverage, it may expect a signal level in the range - 90dBm to -20dBm. If the communication subsystem 11 reports a signal level below about -100 dBm or -150 dBm, then the call termination module 60 may deduce that coverage has been lost and it may trigger the timer 62.

If coverage is not re-obtained before expiry of the timer 62, then the loss of coverage handler 64 is triggered. The loss of coverage handler 64 terminates the service locally due to the loss of coverage by the mobile device 10. For example, the loss of coverage handler 64 may issue a service release command to the media service application, such as a VoIP call release command. The loss of coverage handler 64 may issue other directives to close applications or release resources related to the media service, as may be required by the particular application. In one embodiment, the loss of coverage handler 64 may notify the service application so that the service application can update its user interface to indicate that the service has been disconnected.

In another aspect according to the present application, the timer 62 is configured to start whenever a data packet is received from another mobile device in connection with an active media service. The communications subsystem 11 or the media service software application 58 may notify the call termination module 60 of receipt of any data packets related to the media service. Whenever a data packet is received from the other mobile device, the timer 62 resets and begins counting anew. In one embodiment, the communication subsystem 11 sends an interrupt (or event, etc.) to the microprocessor 38 whenever a data packet is received. The various layers of the communications protocol route the packet appropriately. An RTP packet is identifiable in part because of the port to which it is sent since the RTP packets are enclosed in UDP packets.

If the timer 62 reaches a preset time period, such as thirty seconds, without receiving any further data packets from the other mobile device, then the timer 62 expires. Expiry of the timer 62 triggers the loss of coverage handler 64, which terminates the service. The loss of coverage handler 64 terminates the service locally due to the loss of coverage by the other mobile device. For example, the loss of coverage handler 64 may issue a service release command to the media service application, such as a VoIP call release command. The loss of coverage handler 64 may issue other directives to close applications or release resources related to the media service, as may be required by the particular application. The loss of coverage handler 64 may also send a service release command to its proxy server, if any, and/or to the other device and/or its proxy server. For example, the loss of coverage handler 64 may cause the mobile device 10 to transmit a SIP BYE message to terminate the SIP session. It will be appreciated that the preset time period may be established having regard to any silence suppression or other techniques that may be employed by the service and that may give rise to an absence of data packets despite the remote mobile device remaining in coverage.

Although Figure 3 depicts the call termination module 60 as residing in flash memory 24 for execution by the microprocessor 38, those of ordinary skill in the art will appreciate that the call termination module 60 may be incorporated as a part of the communication subsystem 11 and may be executed by a processor internal to the communication subsystem 11.

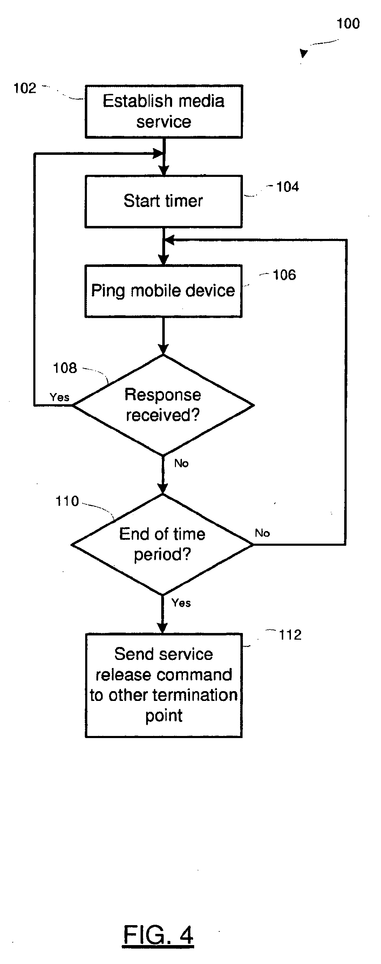

Reference is now made to Figure 4, which shows, in flowchart form, a method 100 for handling out-of-coverage conditions using a proxy server. The method 100 begins in step 102 with establishment of a media service between a mobile device and another termination point. The media service may, for example, be a VoIP call. The media service is not necessarily a two-party service and may include multi-point or broadcast communications.

The proxy server may be associated with setting up the media path over which the media data will be sent from the other termination point to the mobile device. For example, the proxy server may be a SIP proxy server and may apply SIP protocols to establish an RTP path.

Once the media service is established, then in step 104 the proxy server initiates a timer and in step 106 it pings the mobile device. In step 108, the proxy server evaluates whether or not it has received a response to the ping. Step 108 may incorporate a certain level of delay to await receipt of a response message. If a response message is received, then the proxy server may conclude that the mobile device is still in-coverage and the method returns to step 104 wherein it repeats. A delay may be incorporated between steps 108 and 104 so as to prevent the proxy server from continually pinging the mobile device. In some embodiments, it may be sufficient to test the mobile device by pinging it about every second. In other embodiments, more frequent or less frequent pinging may be suitable.

If no response is received in step 108 in the normal time frame of, for example, half a second, then in step 110 the proxy server evaluates whether the timer has reached the end of a predetermined time period. The predetermined time period marks the length of time that the proxy server allows for unresponsiveness before it deems the mobile device to be out-of-coverage. In some embodiments, the predetermined time period may be a few seconds, for example between about three and ten seconds. It may be longer or shorter in other embodiments.

If the end of the predetermined time period has not been reached, then the method 100 returns to step 106 to ping the device again. As before, the method 100 awaits a response from the device in step 108. If no response is received after a preset wait period, then the method 100 continues to step 110 again to evaluate whether the timer has reached the end of the predetermined time period.

If the timer has reached the end of the predetermined time period in step 110, then the method 100 proceeds to step 112 wherein the proxy server sends a service release command to the other termination point or its proxy server. The service release command may, in one embodiment, comprise a call release message, such as, for example, a SIP BYE message. In one embodiment, the proxy server also marks the mobile device as "unavailable" instead of "busy" since it is now out-of-coverage.

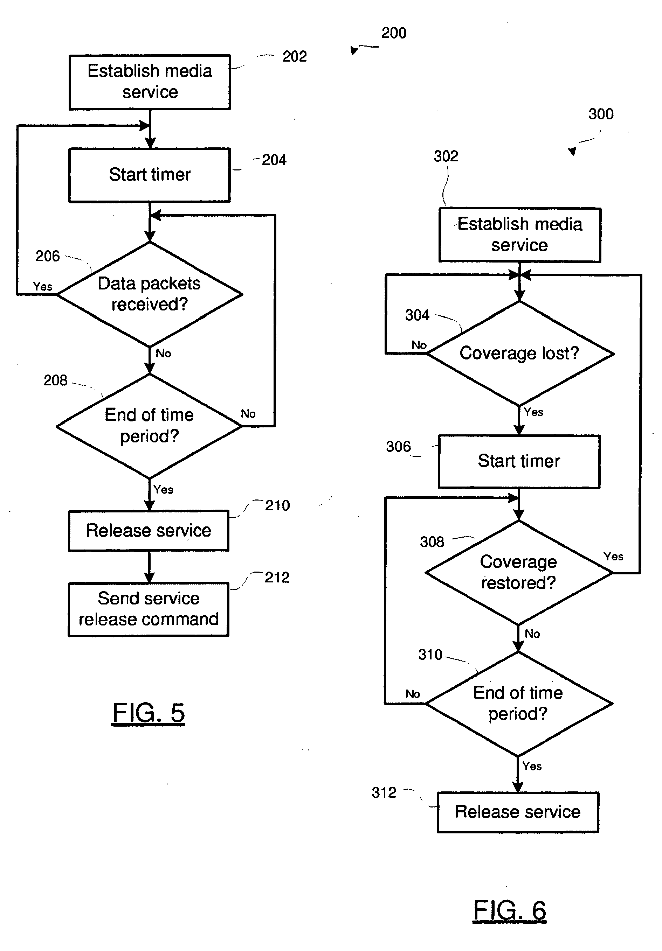

Reference is next made to Figure 5, which shows, in flowchart form, a method 200 of detecting that a remote mobile device has lost coverage. The method 200 is implemented in a termination point, such as a mobile wireless device, and begins in step 202 with the establishment of a media service between the termination point and the remote mobile device. The media service may comprise any service involving transmission of media packets, such as audio or video data. In one embodiment, the media service comprises a VoIP call. The media service involves the transmission of packetized real-time data using a connectionless transport protocol, such as RTP. Because the media path is connectionless, the termination point may be unaware that the mobile device has lost coverage.

To detect whether the mobile device has lost coverage, the termination point starts a timer in step 204 and watches for receipt of a data packet from the mobile device in step 206. If a data packet is received in step 206, then the method 200 returns to step 202 to reset the timer and begin watching for data packets from the mobile device again. If a data packet is not detected in step 204, then the method 200 evaluates whether the time has reached the end of a predetermined time period in step 208. The predetermined time period corresponds to the length of time after which the termination point will deem the mobile device to have lost coverage if no data packets are received from it. In one embodiment, the predetermined time period may be about thirty seconds; however, it may be shorter or longer depending on the application and implementation.

If the end of the predetermined time period has not been reached in step 208, then the method 200 returns to step 206 to evaluate whether a data packet has been received. It continues to watch for a data packet from the mobile device and evaluate whether the predetermined time period has expired until either event occurs. If the end of the predetermined time period is reached, then the method 200 continues in step 210, wherein the mobile device is deemed to be out-of-coverage and the termination point releases the service. This may include instructing the service application to release any resources, such as media paths, that are assigned to the service. In the case of a VoIP call, it may include issuing a call release command. In step 212, the termination point may also send a service release command to the remote mobile device or to proxy servers within the wireless network. For example, it may send a SIP BYE message.

Now reference is made to Figure 6, which shows a flowchart depicting a method 300 of terminating a service in response to an out-of-coverage condition in a wireless device. As with the method 200 from Figure 5, the method 300 begins in step 302 with the establishment of a media service. The media service involves the transmission of real-time data, such as audio or video, over packet-based networks using a suitable peer-to-peer transport protocol, such as RTP.

In step 304 the mobile device detects that it has lost coverage with the wireless network. It may recognize that it has lost coverage due to a signal from the radio chipset, i.e. communication subsystem, in the mobile device. If coverage is lost, then in step 306 the mobile device begins a timer. Then in step 308, the mobile device determines whether it has regained coverage, i.e. whether it has been able to resume RF communications with a base station in the wireless network. If so, then the method 300 returns to step 304 to await detection of a further out-of-coverage condition.

If coverage has not been restored, then the method 300 proceeds to step 310 to evaluate whether the timer has reached the end of a predetermined time period. The predetermined time period marks the length of time after which the mobile device may deem that it has lost coverage and will not be able to easily restore coverage. In one embodiment, the predetermined time period is a few seconds, for example about five seconds. If this predetermined time period is reached, then the method 300 continues to step 312, wherein the mobile device locally terminates the active service. This may include notifying any active service applications and releasing any associated device resources. If the predetermined time period has not been reached, then the method 300 returns to step 308 to evaluate whether coverage has been restored.

Those of ordinary skill in the art will appreciate that the foregoing methods described in conjunction with Figures 4, 5, and 6 are example embodiments only.

## Claims

1. A method of self-terminating a media service in a mobile device due to an out-of-coverage condition, the media service being established between a mobile device (10) and a remote termination point over a wireless network (12), the media service comprising the transmission of data packets using a peer-to-peer connectionless transport protocol, the mobile device (10) going out-of-coverage, **characterised in that** the method comprises the steps of:
recognizing a loss of signal coverage on the mobile device (10) and starting a timer (62) in response to said loss of signal coverage;
stopping said timer (62) if said signal coverage is restored; and
terminating the media service on the mobile device (10) if said timer (62) exceeds a predetermined threshold, wherein said step of terminating comprises closing a media service application (58) on the mobile device (10) associated with the media service and releasing resources on the mobile device (10).

2. The method claimed in claim 1, **characterised in that** the mobile device (10) comprises a communication subsystem (11) for engaging in RF communications with the wireless network (12), and wherein said step of recognizing comprises receiving a lost coverage signal from said communication subsystem (11) if said communication subsystem (11) loses connectivity with the wireless network (12), said lost coverage signal indicating said loss of signal coverage.

3. The method claimed in claim 2, **characterised in that** said step of stopping said timer (62) comprises detecting a restored coverage signal from said communication subsystem (11) if said communication subsystem (11) restores connectivity with the wireless network (12).

4. The method claimed in any preceding claim, **characterised in that** said predetermined threshold comprises generally five seconds.

5. The method claimed in any preceding claim, **characterised in that** the media service comprises a VoIP call and wherein said step of terminating comprises releasing said VoIP call.

6. The method claimed in any preceding claim, **characterised in that** said peer-to-peer connectionless transport protocol comprises real-time transport protocol (RTP).

7. A mobile device (10) for engaging in a media service with a remote termination point over a wireless network (12), the media service comprising the transmission of data packets using a peer-to-peer connectionless transport protocol, the mobile device (10) comprising
a communications subsystem (11) for establishing a connection with the wireless network (12) and receiving RF communications, comprising data packets from the remote termination point; and
a processor (38) for controlling said communications subsystem (11),
and **characterised in that** the mobile device (10) comprises:
a call termination module (60) for self-terminating the media service due to an out-of-coverage condition, said call termination module (60) comprising,
a timer (62) for determining an elapsed time since a loss of signal coverage, said timer (62) being triggered by said loss of signal coverage and said timer (62) being stopped by a restoration of signal coverage; and
a loss of coverage handler (64) responsive to said elapsed time reaching a predetermined threshold, wherein said loss of coverage handler (64) terminates the media service on the mobile device (10); said loss of coverage handler (64) comprising a component for releasing resources on the mobile device (10) and closing a media service application (58) on the mobile device (10) associated with the media service.

8. The mobile device claimed in claim 7, **characterised in that** said communication subsystem (11) comprises a coverage component for generating a lost coverage signal in response to said loss of signal coverage, and wherein said timer (62) receives and is triggered by said lost coverage signal.

9. The mobile device claimed in claim 8, **characterised in that** said coverage component further generates a restored coverage signal in response to said restoration of signal coverage, and wherein said timer (11) receives and is stopped by said restored coverage signal.

10. The mobile device claimed in any one of claims 7 to 9, **characterised in that** said predetermined threshold comprises generally five seconds.

11. The mobile device claimed in any one of claims 7 to 10, **characterised in that** the media service comprises a VoIP call and wherein said loss of coverage handler (64) comprises a component for releasing said VoIP call in response to said elapsed time reaching said predetermined threshold.

12. The mobile device claimed in any one of claims 7 to 11, **characterised in that** said peer-to-peer connectionless transport protocol comprises real-time transport protocol (RTP).

13. A method of self-terminating a media service by a first mobile device (10a) due to an out-of-coverage condition at a second mobile device (10b), the media service being conducted between the first mobile device (10a) and the second mobile device (10b) over a wireless network (12), the media service comprising the transmission of data packets using a peer-to-peer connectionless transport protocol, the data packets comprising media data packets containing media data associated with the media service, **characterised in that** the method comprises the steps of:
starting a timer (62) on the first mobile device (10a) after receipt of a said data packet from the second mobile device (10b);
restarting said timer (62) if a further data packet of said media data packets is received from the second mobile device (10b); and
terminating the media service if said timer (62) exceeds a predetermined threshold.

14. The method claimed in claim 13, **characterised in that** said predetermined threshold comprises generally thirty seconds.

15. The method claimed in any one of claims 13 to 14, **characterised in that** said step of terminating comprises a step of releasing resources on said first mobile device (10a).

16. The method claimed in any one of claims 13 to 15, **characterised in that** said step of terminating further comprises a step of sending a service release message to the second mobile device (10b) and/or an associated proxy server (16).

17. The method claimed in claim 16, **characterised in that** said service release message comprises a SIP BYE message.

18. The method claimed in any one of claims 13 to 17, **characterised in that** the media service comprises a VoIP call.

19. The method claimed in any one of claims 13 to 18, **characterised in that** the peer-to-peer connectionless transport protocol comprises real-time transport protocol (RTP).

20. A first mobile device (10a) for engaging in a media service with a second mobile device (10b) over a wireless network (12), the media service operating over a peer-to-peer connectionless transport protocol, the first mobile device (10a) comprising
a communications subsystem (11) for establishing a connection with the wireless network (12) and receiving RF communications, comprising data packets from the second mobile device (10b) using the peer-to-peer connectionless transport protocol; and
a processor (38) for controlling said communications subsystem (11),
and **characterised in that** the mobile device (10) comprises:
a call termination module (60) for self-terminating the media service due to an out-of-coverage condition at the second mobile device (10b), said call termination module (60) comprising,
a timer (62) for determining an elapsed time since receipt of a most recent said data packet from the second mobile device (10b), said timer (62) being started by receipt of said most recent data packet and said timer (62) being restarted by receipt of a subsequent said data packet; and
a loss of coverage handler (64) responsive to said elapsed time reaching a predetermined threshold, wherein said loss of coverage handler terminates the media service,
wherein said most recent data packet and said subsequent data packet each comprise a media data packet containing media data associated with the media service.

21. The first mobile device claimed in claim 20, **characterised in that** said predetermined threshold comprises generally thirty seconds.

22. The first mobile device claimed in any one of claims 20 to 21, **characterised in that** said loss of coverage handler (64) comprises a component for releasing resources on the first mobile device (10a).

23. The first mobile device claimed in any one of claims 20 to 22, **characterised in that** said loss of coverage handler (64) further comprises a component for sending a service release message to the second mobile device (10b) and/or an associated proxy server (16).

24. The first mobile device claimed in claim 23, **characterised in that** said service release message comprises a SIP BYE message.

25. The first mobile device claimed in any one of claims 20 to 24, **characterised in that** the media service comprises a VoIP call.

26. The first mobile device claimed in any one of claims 20 to 25, **characterised in that** the peer-to-peer connectionless transport protocol comprises real-time transport protocol (RTP).

27. A machine readable medium comprising code means executable on a processor of the mobile device (10) of any of claims 7 to 12 for implementing the method of any of claims 1 to 6.

28. A machine readable medium comprising code means executable on a processor of the mobile device (10) of any of claims 20 to 26 for implementing the method of any of claims 13 to 19.

## Patentansprüche

1. Ein Verfahren zum selbständigen Beenden eines Media-Dienstes in einer mobilen Vorrichtung aufgrund einer außerhalb-einer-Abdeckung-Bedingung, wobei der Media-Dienst zwischen einer mobilen Vorrichtung (10) und einem entfernten Endpunkt über ein drahtloses Netzwerk (12) hergestellt wird, wobei der Media-Dienst die Übertragung von Datenpaketen unter Verwendung eines verbindungslosen Peer-to-Peer-Transportprotokolls aufweist, wobei die mobile Vorrichtung (10) außerhalb die Abdeckung kommt, **dadurch gekennzeichnet, dass** das Verfahren die Schritte aufweist:
Erkennen eines Verlusts einer Signalabdeckung auf der mobilen Vorrichtung (10) und Starten eines Timers (62) in Reaktion auf den Verlust der Signalabdeckung;
Anhalten des Timers (62), wenn die Signalabdeckung wiederhergestellt wird; und
Beenden des Media-Dienstes auf der mobilen Vorrichtung (10), wenn der Timer (62) eine vorgegebene Schwelle übersteigt, wobei der Schritt des Beendens aufweist ein Schließen einer Media-Dienst-Anwendung (58) auf der mobilen Vorrichtung (10), die mit dem Media-Dienst assoziiert ist, und Freigeben von Ressourcen auf der mobilen Vorrichtung (10).

2. Das Verfahren gemäß Anspruch 1, **dadurch gekennzeichnet, dass** die mobile Vorrichtung (10) ein Kommunikationsteilsystem (11) zum Teilnehmen an RF-Kommunikationen mit dem drahtlosen Netzwerk (12) aufweist, und wobei der Schritt des Erkennens ein Empfangen eines Abdeckungsverlust-Signals von dem Kommunikationsteilsystem (11) aufweist, wenn das Kommunikationsteilsystem (11) eine Verbindung mit dem drahtlosen Netzwerk (12) verliert, wobei das Abdeckungsverlust-Signal den Verlust einer Signalabdeckung angibt.

3. Das Verfahren gemäß Anspruch 2, **dadurch gekennzeichnet, dass** der Schritt des Anhaltens des Timers (62) aufweist ein Erfassen eines "Abdeckung wiederhergestellt"-Signals von dem Kommunikationsteilsystem (11), wenn das Kommunikationsteilsystem (11) eine Verbindung mit dem drahtlosen Netzwerk (12) wieder herstellt.

4. Das Verfahren gemäß einem vorhergehenden Anspruch, **dadurch gekennzeichnet, dass** die vorgegebene Schwelle im Allgemeinen fünf Sekunden aufweist.

5. Das Verfahren gemäß einem vorhergehenden Anspruch, **dadurch gekennzeichnet, dass** der Media-Dienst einen VoIP-Anruf aufweist und wobei der Schritt des Beendens ein Freigeben des VoIP-Anrufs aufweist.

6. Das Verfahren gemäß einem vorhergehenden Anspruch, **dadurch gekennzeichnet, dass** das verbindungslose Peer-to-Peer-Transportprotokoll ein Echtzeit-Transportprotokoll (RTP - real-time transport protocol) aufweist.

7. Eine mobile Vorrichtung (10) zum Teilnehmen an einem Media-Dienst mit einem entfernten Endpunkt über ein drahtloses Netzwerk (12), wobei der Media-Dienst die Übertragung von Datenpaketen unter Verwendung eines verbindungslosen Peer-to-Peer-Transportprotokolls aufweist, wobei die mobile Vorrichtung (10) aufweist
ein Kommunikationsteilsystem (11) zum Herstellen einer Verbindung mit dem drahtlosen Netzwerk (12) und Empfangen von RF-Kommunikationen, die Datenpakete von dem entfernten Endpunkt aufweisen; und
einen Prozessor (38) zum Steuern des Kommunikationsteilsystems (11), und **dadurch gekennzeichnet, dass** die mobile Vorrichtung (10) aufweist:
ein Anruf-Beendigungs-Modul (60) zum selbständigen Beenden des Media-Dienstes aufgrund einer außerhalb-einer-Abdeckung-Bedingung, wobei das Anruf-Beendigungs-Modul (60) aufweist
einen Timer (62) zum Bestimmen einer vergangenen Zeit seit einem Verlust einer Signalabdeckung, wobei der Timer (62) durch den Verlust der Signalabdeckung ausgelöst wird und der Timer (62) durch eine Wiederherstellung der Signalabdeckung angehalten wird; und eine Abdeckungsverlust-Handhabungsvorrichtung (64) in Reaktion darauf, dass die vergangene Zeit eine vorgegebene Schwelle erreicht, wobei die Abdeckungsverlust-Handhabungsvorrichtung (64) den Media-Dienst auf der mobilen Vorrichtung (10) beendet; wobei die Abdeckungsverlust-Handhabungsvorrichtung (64) eine Komponente aufweist zum Freigeben von Ressourcen auf der mobilen Vorrichtung (10) und Schließen einer Media-Dienst-Anwendung (58) auf der mobilen Vorrichtung (10), die mit dem Media-Dienst assoziiert ist.

8. Die mobile Vorrichtung gemäß Anspruch 7, **dadurch gekennzeichnet, dass** das Kommunikationsteilsystem (11) eine Abdeckungskomponente aufweist zum Erzeugen eines Abdeckungsverlust-Signals in Reaktion auf den Verlust einer Signalabdeckung, und wobei der Timer (62) das Abdeckungsverlust-Signal empfängt und dadurch ausgelöst wird.

9. Die mobile Vorrichtung gemäß Anspruch 8, **dadurch gekennzeichnet, dass** die Abdeckungskomponente weiter ein "Abdeckung wiederhergestellt"-Signal in Reaktion auf die Wiederherstellung einer Signalabdeckung erzeugt, und wobei der Timer (11) das "Abdeckung wiederhergestellt"-Signal empfängt und dadurch angehalten wird.

10. Die mobile Vorrichtung gemäß einem der Ansprüche 7 bis 9, **dadurch gekennzeichnet, dass** die vorgegebene Schwelle im Allgemeinen fünf Sekunden aufweist.

11. Die mobile Vorrichtung gemäß einem der Ansprüche 7 bis 10, **dadurch gekennzeichnet, dass** der Media-Dienst einen VoIP-Anruf aufweist und wobei die Abdeckungsverlust-Handhabungsvorrichtung (64) eine Komponente zum Freigeben des VoIP-Anrufs aufweist in Reaktion darauf, dass die abgelaufene Zeit die vorgegebene Schwelle erreicht.

12. Die mobile Vorrichtung gemäß einem der Ansprüche 7 bis 11, **dadurch gekennzeichnet, dass** das verbindungslose Peer-to-Peer-Transportprotokoll ein Echtzeit-Transportprotokoll (RTP - real-time transport protocol) aufweist.

13. Ein Verfahren zum selbständigen Beenden eines Media-Dienstes durch eine erste mobile Vorrichtung (10a) aufgrund einer außerhalb-einer-Abdeckung-Bedingung an einer zweiten mobilen Vorrichtung (10b), wobei der Media-Dienst zwischen der ersten mobilen Vorrichtung (10a) und der zweiten mobilen Vorrichtung (10b) über ein drahtloses Netzwerk (12) geführt wird, wobei der Media-Dienst die Übertragung von Datenpaketen unter Verwendung eines verbindungslosen Peer-to-Peer-Transportprotokolls aufweist, wobei die Datenpakete Media-Datenpakete aufweisen, die mit dem Media-Dienst assoziierte Media-Daten enthalten, **dadurch gekennzeichnet, dass** das Verfahren die Schritte aufweist:
Starten eines Timers (62) auf der ersten mobilen Vorrichtung (10a) nach einem Empfang eines Datenpakets von der zweiten mobilen Vorrichtung (10b);
Neustarten des Timers (62), wenn ein weiteres Datenpaket der Media-Datenpakete von der zweiten mobilen Vorrichtung (10b) empfangen wird; und
Beenden des Media-Dienstes, wenn der Timer (62) eine vorgegebene Schwelle übersteigt.

14. Das Verfahren gemäß Anspruch 13, **dadurch gekennzeichnet, dass** die vorgegebene Schwelle im Allgemeinen dreißig Sekunden aufweist.

15. Das Verfahren gemäß einem der Ansprüche 13 bis 14, **dadurch gekennzeichnet, dass** der Schritt des Beendens einen Schritt eines Freigebens von Ressourcen auf der ersten mobilen Vorrichtung (10a) aufweist.

16. Das Verfahren gemäß einem der Ansprüche 13 bis 15, **dadurch gekennzeichnet, dass** der Schritt des Beendens weiter einen Schritt eines Sendens einer Dienst-Freigabe-Nachricht an die zweite mobile Vorrichtung (10b) und/oder einen assoziierten Proxy-Server (16) aufweist.

17. Das Verfahren gemäß Anspruch 16, **dadurch gekennzeichnet, dass** die Dienst-Freigabe-Nachricht eine SIP-BYE-Nachricht aufweist.

18. Das Verfahren gemäß einem der Ansprüche 13 bis 17, **dadurch gekennzeichnet, dass** der Media-Dienst einen VoIP-Anruf aufweist.

19. Das Verfahren gemäß einem der Ansprüche 13 bis 18, **dadurch gekennzeichnet, dass** das verbindungslose Peer-to-Peer-Transportprotokoll ein Echtzeit-Transportprotokoll (RTP - real-time transport protocol) aufweist.

20. Eine erste mobile Vorrichtung (10a) zum Teilnehmen an einem Media-Dienst mit einer zweiten mobilen Vorrichtung (10b) über ein drahtloses Netzwerk (12), wobei der Media-Dienst über ein verbindungsloses Peer-to-Peer-Transportprotokoll arbeitet, wobei die erste mobile Vorrichtung (10a) aufweist
ein Kommunikationsteilsystem (11) zum Herstellen einer Verbindung mit dem drahtlosen Netzwerk (12) und Empfangen von RF-Kommunikationen, die Datenpakete von der zweiten mobilen Vorrichtung (10b) aufweisen, unter Verwendung des verbindungslosen Peer-to-Peer-Transportprotokolls; und
einen Prozessor (38) zum Steuern des Kommunikationsteilsystems (11),
und **dadurch gekennzeichnet, dass** die mobile Vorrichtung (10) aufweist:
ein Anruf-Beenden-Modul (60) zum selbständigen Beenden des Media-Dienstes aufgrund einer außerhalb-einer-Abdeckung-Bedingung an der zweiten mobilen Vorrichtung (10b), wobei das Anruf-Beenden-Modul (60) aufweist
einen Timer (62) zum Bestimmen einer vergangenen Zeit seit einem Empfang eines letzten Datenpakets von der zweiten mobilen Vorrichtung (10b), wobei der Timer (62) durch einen Empfang des letzten Datenpakets gestartet wird und der Timer (62) durch einen Empfang eines nachfolgenden Datenpakets erneut gestartet wird; und
eine Abdeckungsverlust-Handhabungsvorrichtung (64) in Reaktion darauf, dass die vergangene Zeit eine vorgegebene Schwelle erreicht, wobei die Abdeckungsverlust-Handhabungsvorrichtung den Media-Dienst beendet,
wobei das letzte Datenpaket und das nachfolgende Datenpaket jeweils ein Media-Datenpaket aufweisen, das Media-Daten enthält, die mit dem Media-Dienst assoziiert sind.

21. Die erste mobile Vorrichtung gemäß Anspruch 20, **dadurch gekennzeichnet, dass** die vorgegebene Schwelle im Allgemeinen dreißig Sekunden aufweist.

22. Die erste mobile Vorrichtung gemäß einem der Ansprüche 20 bis 21, **dadurch gekennzeichnet, dass** die Abdeckungsverlust-Handhabungsvorrichtung (64) eine Komponente zum Freigeben von Ressourcen auf der ersten mobilen Vorrichtung (10a) aufweist.

23. Die erste mobile Vorrichtung gemäß einem der Ansprüche 20 bis 22, **dadurch gekennzeichnet, dass** die Abdeckungsverlust-Handhabungsvorrichtung (64) weiter eine Komponente zum Senden einer Dienst-Freigabe-Nachricht an die zweite mobile Vorrichtung (10b) und/oder einen assoziierten Proxy-Server (16) aufweist.

24. Die erste mobile Vorrichtung gemäß Anspruch 23, **dadurch gekennzeichnet, dass** die Dienst-Freigabe-Nachricht eine SIP-BYE-Nachricht aufweist.

25. Die erste mobile Vorrichtung gemäß einem der Ansprüche 20 bis 24, **dadurch gekennzeichnet, dass** der Media-Dienst einen VoIP-Anruf aufweist.

26. Die erste mobile Vorrichtung gemäß einem der Ansprüche 20 bis 25, **dadurch gekennzeichnet, dass** das verbindungslose Peer-to-Peer-Transportprotokoll ein Echtzeit-Transportprotokoll (RTP - real-time transport protocol) aufweist.

27. Ein maschinenlesbares Medium, das Codemittel aufweist, die auf einem Prozessor der mobilen Vorrichtung (10) gemäß einem der Ansprüche 7 bis 12 zum Implementieren des Verfahrens gemäß einem der Ansprüche 1 bis 6 ausführbar sind.

28. Ein maschinenlesbares Medium, das Codemittel aufweist, die auf einem Prozessor der mobilen Vorrichtung (10) gemäß einem der Ansprüche 20 bis 26 zum Implementieren des Verfahrens gemäß einem der Ansprüche 13 bis 19 ausführbar sind.

## Revendications

1. Procédé de terminaison automatique d'un service multimédia sur un dispositif mobile, en raison d'une situation de perte de la couverture, le service multimédia étant établi entre un dispositif mobile (10) et un point de terminaison distant, via un réseau sans fil (12), le service multimédia comprenant la transmission de paquets de données à l'aide d'un protocole de transport entre homologues sans connexion, le dispositif mobile (10) sortant de la zone de couverture, **caractérisé en ce que** le procédé comprend les étapes consistant à :
détecter la perte de couverture du signal par le dispositif mobile (10) et lancer un compteur de temps (62) en réponse à ladite perte de couverture du signal ;
arrêter ledit compteur de temps (62) si ladite couverture du signal est rétablie ; et
terminer le service multimédia sur le dispositif mobile (10) si ledit compteur de temps (62) dépasse un seuil prédéterminé, ladite étape de terminaison comprenant l'étape consistant à fermer sur le dispositif mobile (10) une application de service multimédia (58) qui est associée au service multimédia et à libérer des ressources sur le dispositif mobile (10).

2. Procédé selon la revendication 1, **caractérisé en ce que** le dispositif mobile (10) comprend un sous-système de communication (11) destiné à engager des communications RF avec le réseau sans fil (12) et dans lequel ladite étape de détection comprend la réception d'un signal de perte de la couverture en provenance dudit sous-système de communication (11) si ledit sous-système de communication (11) perd la connectivité avec le dispositif mobile (10), ledit signal de perte de la couverture indiquant ladite perte de couverture du signal.

3. Procédé selon la revendication 2, **caractérisé en ce que** ladite étape d'arrêt dudit compteur de temps (62) comprend l'étape consistant à détecter un signal de rétablissement de la couverture en provenance dudit sous-système de communication (11) si ledit sous-système de communication (11) rétablit la connectivité avec le réseau sans fil (12).

4. Procédé selon l'une quelconque des revendications précédentes, **caractérisé en ce que** ledit seuil prédéterminé consiste généralement en cinq secondes.

5. Procédé selon l'une quelconque des revendications précédentes, **caractérisé en ce que** le service multimédia consiste en un appel VoIP et dans lequel ladite étape de terminaison comprend la libération dudit appel VoIP.

6. Procédé selon l'une quelconque des revendications précédentes, **caractérisé en ce que** ledit protocole de transport entre homologues sans connexion consiste en le protocole de transport en temps réel (RTP pour « *Real Time Protocol* »).

7. Dispositif mobile (10) destiné à s'engager dans un service multimédia avec un point de terminaison distant via un réseau sans fil (12), le service multimédia comprenant la transmission de paquets de données à l'aide d'un protocole de transport entre homologues sans connexion, le dispositif mobile (10) comprenant :
un sous-système de communication (11) destiné à établir une connexion avec le réseau sans fil (12) et à recevoir des communications RF comprenant des paquets de données en provenance du point de terminaison distant ; et
un processeur (38) destiné à commander ledit sous-système de communication (11) ; et
**caractérisé en ce que** le dispositif mobile (10) comprend :
un module de terminaison d'appel (60) destiné à terminer automatiquement le service multimédia en raison d'une situation de perte de la couverture, ledit module de terminaison d'appel (60) comprenant :
un compteur de temps (62) destiné à déterminer le temps écoulé depuis une perte de couverture du signal, ledit compteur de temps (62) étant déclenché par ladite perte de couverture du signal et ledit compteur de temps (62) étant arrêté par un rétablissement de la couverture du signal ; et
un gestionnaire de perte de la couverture (64) qui répond au dépassement d'un seuil prédéterminé par ledit temps écoulé, dans lequel ledit gestionnaire de perte de la couverture (64) termine le service multimédia sur le dispositif mobile (10) ; ledit gestionnaire de perte de la couverture (64) comprenant un composant destiné à libérer des ressources sur le dispositif mobile (10) et à fermer sur le dispositif mobile (10) une application de service multimédia (58) qui est associée au service multimédia.

8. Dispositif mobile selon la revendication 7, **caractérisé en ce que** ledit sous-système de communication (11) comprend un composant de couverture destiné à produire un signal de perte de la couverture en réponse à ladite perte de couverture du signal et dans lequel ledit compteur de temps (62) reçoit ledit signal de perte de la couverture et est déclenché par celui-ci.

9. Dispositif mobile selon la revendication 8, **caractérisé en ce que** ledit composant de couverture produit en outre un signal de rétablissement de la couverture en réponse audit rétablissement de la couverture du signal et dans lequel ledit compteur de temps (11) reçoit ledit signal de rétablissement de la couverture et est déclenché par celui-ci.

10. Dispositif mobile selon l'une quelconque des revendications 7 à 9, **caractérisé en ce que** ledit seuil prédéterminé consiste généralement en cinq secondes.

11. Dispositif mobile selon l'une quelconque des revendications 7 à 10, **caractérisé en ce que** le service multimédia consiste en un appel VoIP et dans lequel ledit gestionnaire de perte de couverture (64) comprend un composant destiné à libérer ledit appel VoIP en réponse au fait que ledit temps écoulé a atteint ledit seuil prédéterminé.

12. Dispositif mobile selon l'une quelconque des revendications 7 à 11, **caractérisé en ce que** protocole de transport entre homologue sans connexion consiste en le protocole de transport en temps réel (RTP pour « *Real Time Protocol* »).

13. Procédé de terminaison automatique d'un service multimédia par un premier dispositif mobile (10a) à la suite d'une situation de perte de la couverture sur un second dispositif mobile (10b), le service multimédia se déroulant entre le premier dispositif mobile (10a) et le second dispositif mobile (10b) sur un réseau sans fil (12), le service multimédia comprenant la transmission de paquets de données à l'aide d'un protocole de transport entre homologues sans connexion, les paquet de données consistant en paquets de données multimédia contenant des données multimédia associées au service multimédia, **caractérisé en ce que** le procédé comprend les étapes consistant à :
démarrer un compteur de temps (62) sur le premier dispositif mobile (10a) après réception d'un desdits paquets de données en provenance du second dispositif mobile (10b) ;
relancer ledit compteur de temps (62) si un autre paquet de données parmi lesdits paquets de données multimédia est reçu en provenance du second dispositif mobile (10b) ; et
terminer le service multimédia si ledit compteur de temps (62) dépasse un seuil prédéterminé.

14. Procédé selon la revendication 13, **caractérisé en ce que** ledit seuil prédéterminé consiste généralement en cinq secondes.

15. Procédé selon l'une quelconque des revendications 13 et 14, **caractérisé en ce que** ladite étape de terminaison comprend une étape consistant à libérer des ressources sur ledit premier dispositif mobile (10a).

16. Procédé selon l'une quelconque des revendications 13 à 15, **caractérisé en ce que** ladite étape de terminaison comprend en outre une étape consistant à envoyer un message de libération de service au second dispositif mobile (10b) et/ou à un serveur mandataire associé (16).

17. Procédé selon la revendication 16, **caractérisé en ce que** ledit message de libération de service consiste en un message SIP BYE.

18. Procédé selon l'une quelconque des revendications 13 à 17, **caractérisé en ce que** le service multimédia consiste en un appel VoIP.

19. Procédé selon l'une quelconque des revendications 13 à 18, **caractérisé en ce que** le protocole de transport entre homologues sans connexion consiste en le protocole de transport en temps réel (RTP pour « *Real Time Protocol* »).

20. Premier dispositif mobile (10a) destiné à engager un service multimédia avec un second dispositif mobile (10b) sur un réseau sans fil (12), le service multimédia fonctionnant sur un protocole de transport entre homologues sans connexion, le premier dispositif mobile (10a) comprenant :
un sous-système de communication (11) destiné à établir une connexion avec le réseau sans fil (12) et à recevoir des communications RF comprenant des paquets de données en provenance du second dispositif mobile (10b) à l'aide du protocole de transport entre homologues sans connexion ; et
un processeur (38) destiné à commander ledit sous-système de communication (11) ; et
**caractérisé en ce que** le dispositif mobile (10) comprend :
un module de terminaison d'appel (60) destiné à terminer automatiquement le service multimédia en raison d'une situation de perte de la couverture sur le second dispositif mobile (10b), ledit module de terminaison d'appel (60) comprenant :
un compteur de temps (62) destiné à déterminer le temps écoulé depuis la réception dudit paquet de données le plus récent en provenance du second dispositif mobile (10b), ledit compteur de temps (62) étant démarré par la réception dudit paquet de données le plus récent et ledit compteur de temps (62) étant arrêté par la réception d'un paquet de données suivant ; et
un gestionnaire de perte de la couverture (64) qui répond au dépassement d'un seuil prédéterminé par ledit temps écoulé, dans lequel ledit gestionnaire de perte de la couverture termine le service multimédia ;
dans lequel ledit paquet de données le plus récent et ledit paquet de données suivant comprennent tous deux un paquet de données multimédia contenant des données multimédia associées au service multimédia.

21. Premier dispositif mobile selon la revendication 20, **caractérisé en ce que** ledit seuil prédéterminé consiste généralement en trente secondes.

22. Premier dispositif mobile selon l'une quelconque des revendications 20 et 21, **caractérisé en ce que** ledit gestionnaire de perte de couverture (64) comprend un composant destiné à libérer des ressources sur le premier dispositif mobile (10a).

23. Premier dispositif mobile selon l'une quelconque des revendications 20 à 22, **caractérisé en ce que** ledit gestionnaire de perte de couverture (64) comprend en outre un composant destiné à envoyer un message de libération de service au second dispositif mobile (10b) et/ou à un serveur mandataire associé (16).

24. Premier dispositif mobile selon la revendication 23, **caractérisé en ce que** ledit message de libération de service consiste en un message SIP BYE.

25. Premier dispositif mobile selon l'une quelconque des revendications 20 à 24, **caractérisé en ce que** le service multimédia consiste en un appel VoIP.

26. Premier dispositif mobile selon l'une quelconque des revendications 20 à 25, **caractérisé en ce que** le protocole de transport entre homologues sans connexion consiste en le protocole de transport en temps réel (RTP pour « *Real Time Protocol* »).

27. Support lisible par la machine comprenant un moyen de code exécutable sur un processeur du dispositif mobile (10) selon l'une quelconque des revendications 7 à 12 afin de mettre en oeuvre le procédé selon l'une quelconque des revendications 1 à 6.

28. Support lisible par la machine comprenant un moyen de code exécutable sur un processeur du dispositif mobile (10) selon l'une quelconque des revendications 20 à 26 afin de mettre en oeuvre le procédé selon l'une quelconque des revendications 13 à 19.
